# EUROPEAN PATENT APPLICATION

(11) **EP 1 484 912 A2**
(43) Date of publication of application: **08.12.2004**
(21) Application number: 04252907.3
(22) Date of filing: 19.05.2004
(51) Int. Cl.: H04N 5/335

(54) **CMOS image sensor having high speed sub sampling**

(30) Priority: 04.06.2003 US 454913
(71) Applicant: OmniVision Technologies, Inc., Sunnyvale, California 94089 (US)
(72) Inventor: Yang, Hongli, Cupertino California 95014 (US); He, Xinping, c/o Omnivision Technologies, Inc., Sunnyvale California 94089 (US)
(74) Representative: Hackney, Nigel John

(57) **Abstract**

A method of sub sampling signals from an image sensor having a pixel array. The pixel array has a plurality of columns, each column having a column readout circuit. The method comprises averaging the signals output by a plurality of adjacent column readout circuits and outputting the averaged signal to an output bus.

## Description

The present invention relates to CMOS image sensors, and more particularly, to an image sensor that can provide high frame rate reduced resolution images using analog sub sampling and averaging.

Image sensors are used to produce an image representing an object. The image sensors include rows and columns of pixels. The pixels generate small photo signals proportional to light reflected from an object to be imaged. The photo signal is read and processed by signal processing circuitry to create an image representing the object.

Pixels belonging to the same column (also referred to as bitline) are usually connected at a common output node from where the signal is read out. Each pixel in a same bitline is individually controlled to read out at the common output node. At the output node, a column readout circuit is provided to read out and amplify the photo signal. Typically, one column readout circuit is associated with each column of the pixel array.

For image sensors, it has been the general trend to increase the resolution of the image sensor by increasing the number of pixels. For example, CMOS image sensors have progressed from a few hundred thousand pixels to upwards of 3.1 million pixels recently. While in general it is desirable to have a high resolution in order to capture a more life-like image, there are instances where it is desirable to use less than the full resolution of the image sensor. For example, where the image sensor is used in a digital still camera or video recorder with a "preview mode", the previewed image is typically at a much lower resolution.

Previous methods for providing a lower resolution preview image involved using digital signal processing after the full resolution image has been read out in the analog domain. A simple averaging of blocks or groups of pixels is performed to lower the resolution. This method results in good image quality, but is hampered by the slow relative speed. Another method is to simply skip the readout of entire rows or columns of the image sensor This method provides high speed imaging, but lower relative image quality An example of this approach is shown in U.S. Patent No. 6,486,912 to Aizawa et al.

### BRIEF DESCRIPTION OF THE DRAWINGS

The foregoing aspects and many of the attendant advantages of the invention will become more readily appreciated as the same become better understood by reference to the following detailed description, when taken in conjunction with the accompanying drawings, wherein:
Figure 1 is a schematic diagram of an image sensor formed in accordance with an embodiment of the present invention.
Figure 2 shows one implementation of a column readout and averaging circuit that may be used with the present invention

In the following description, numerous specific details are provided, such as the identication of various system components, to provide a thorough understanding of embodiments of the invention. One skilled in the art will recognize. however, that the invention can be practiced without one or more of the specific details or with other methods, components, materials, etc. In still other instances, well-known structures, materials, or operations are not shown or described in detail to avoid obscuring aspects of various embodiments of the invention.

Reference throughout this specification to "one embodiment'' or "an embodiment" means that a particular feature, structure, or characteristic described in connection with the embodiment is included in at least one embodiment of the present invention. Thus, the appearance of the phrases "in one embodiment" or "in an embodiment'' in various places throughout this specification are not necessarily all referring to the same embodiment. Furthermore, the particular features, structures, or characteristics may be combined in any suitable manner in one or more embodiments.

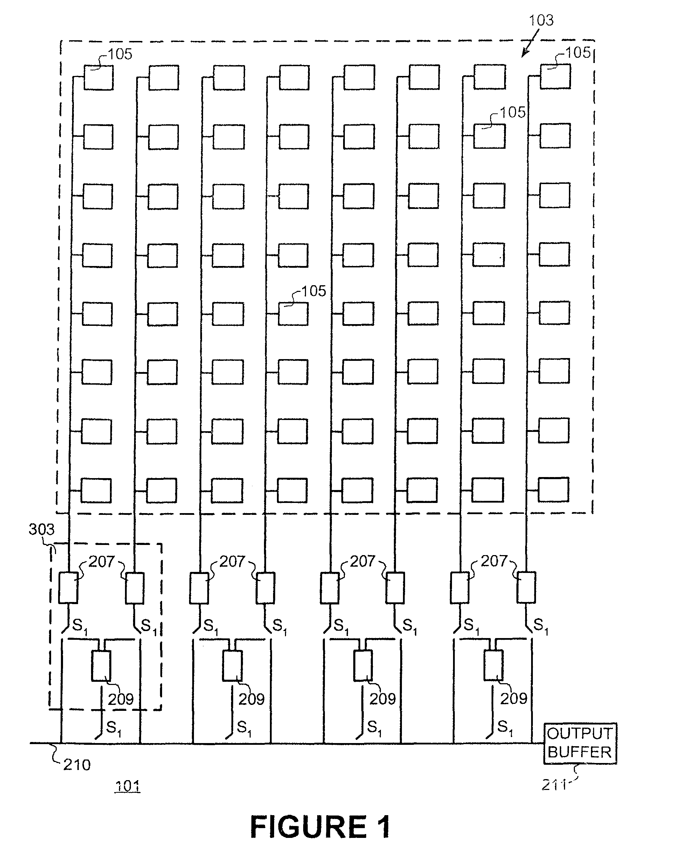

A CMOS image sensor typically includes an array of pixels formed into columns and rows. Thus, turning to Figure 1, an image sensor 101 includes a pixel array 103 formed by a two-dimensional array of pixels 105. The pixels 105, for example, may be active pixels, which include amplification within each pixel 105.

The configuration of the active pixels 105 is conventional. In operation, the pixels 105 provide a light signal output that is indicative of the amount of light impinging on the pixel.

At the bottom portion of the pixel array 103 are a plurality of column readout circuits 207. Note that the column readout circuits 207 are shown in the "bottom" of Figure 1 for convenience purposes, and in actuality, the column readout circuits 207 may be placed almost anywhere on the integrated circuit relative to the pixel array 103.

Figure 1 shows in schematic view how the method and apparatus of the present invention can be implemented in one specific implementation. It can be appreciated that other implementations are possible while still staying within the spirit and scope of the present invention. As seen in Figure 1, a plurality of signal averagers 209 are incorporated into the same integrated circuit die of the image sensor 101. Each signal averager 209 is operative to perform an averaging of signals input to the averager and provide that average as an averaged output signal.

In this application, the input signals are those signals that are output by the column readout circuits 207. In general, the signal averagers 209 average signals that are from consecutive and adjacent columns of the pixel array 103. In Figure 1, a signal averager 209 performs averaging of the signals output by two adjacent column readout circuits 207. However, it can be appreciated that three or more column readout circuits 207 may be input into a single signal averager 209. As will be seen in further detail below, a larger number of columns inputting its signals into a signal averager 209 will result in greater sub sampling, i.e., more compression.

The signal averagers 209 are operative to receive signals from the column readout circuits 207 and provide an output that is the average of the signals output from the column readout circuits 207. The term "average" as used herein is meant to indicate not only a mathematical average, but also any value that is formed as a composite of the input signals to the signal averager 209. For example, the term "average" may be a simple summation of the signals, may be some weighted function of the input signals, or other composite of the input signals to provide an output Thus, the term "average" is chosen to describe the signal averagers 209 because in one specific embodiment of the present invention, an arithmetic average is taken by the signal averager 209. However, the term "average" is meant to encompass any sort of output that is dependent or related to the signals provided by the column readout circuits 207 and as inputs to the signal averager 209.

The image sensor 101 can operate in two alternate modes. In a first mode, referred to as the "high resolution" mode, all of the individual pixels 105 of the image sensor 101 are read out individually. The "high resolution" mode is used when high resolution images are desired, such as for example, when taking a digital still image. In the high resolution mode, the image sensor 101 operates in accordance with the prior art and the signal averagers 209 are not operative.

Specifically, referring to Figure 1, a switching system comprised of a plurality of switches S 1 are used to connect and disconnect the signal averagers 209 from an output bus 210 and output buffer 211. The switching system S 1 shown in Figure 1 is one embodiment that is useful for conceptualizing how the averagers 209 can be engaged and disengaged. However, it can be appreciated that actual implementations may have different switching arrangements as will be seen below.

The switching system S 1 comprises switches S 1 that when in high resolution mode routes the signals from the column readout circuits 207 to the output bus 210. However, when the image sensor 101 is in the second "low resolution" mode (also referred to as sub sampling mode), the switches S 1 are activated such that the column readout circuits 207 provide their signal to the signal averagers 209. Further, the output of the signal averagers 209 are provided to the output bus 210. By providing the signals from two or more column readout circuits 207 to a signal averager 209, the amount of data that is output by the pixel array 103 is reduced by a factor of 2 or more. This reduction in data will reduce the amount of storage required for the image and also increase the rate at which the pixel array 103 can be read out. Moreover, by performing the signal averaging, the sensitivity of the image sensor 101 is increased. By using the signal averager 209 and the switching system S1, in conjunction with reading out two columns at a time, this can greatly increase the speed at which each frame is read out.

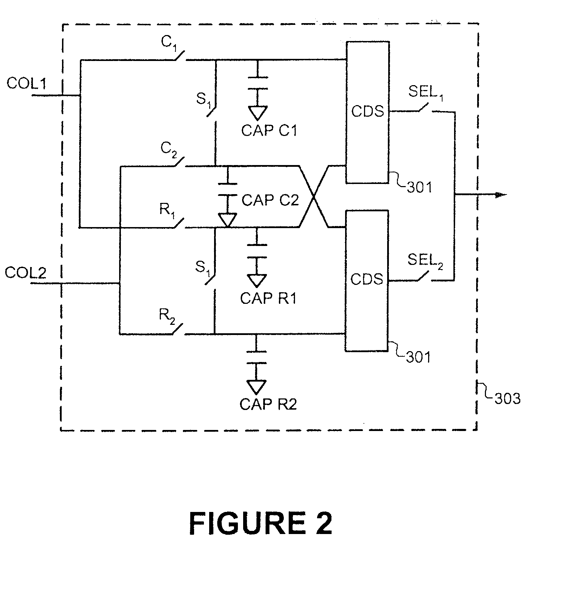

Figure 2 shows one implementation of the column readout circuit 207 combined with a simple signal averager 209. In this particular implementation, the signal averager 209 and column readout circuits 207 are combined into a single sub sampling circuit 303. As seen in Figure 2, signals from two column bitlines (designated as Col 1 and Col 2) are input into the sub sampling circuit 303. The signal from Col 1 is provided to a reference capacitor CapR1 and a signal capacitor Cap1. The signal is provided through the switches R1 and C1. As is known in the art, a reference signal is first captured on the reference capacitor R1 and then a light signal is captured on a signal capacitor Cap1. A similar structure is formed for the Col 2 bitline.

In high resolution mode, the switches S1 are open and the result of the sub sampling circuit 303 is that a reference signal is captured on CapR1 and CapR2 and a light signal is captured on the capacitors. These signals are then sent through a correlated double sampling circuit (CDS) 301 for subtracting the reference signal from the light signal captured on the pixel 105. This is then output by Sel1 and Sel2 onto the output bus 210 for pixel output.

However, in low resolution mode, after CapC and CapR are stored the switches S 1 are closed, allowing CapR1 and CapR2 to act as a single capacitor. Similarly, Cap1 and Cap2 act as a single capacitor. additionally, the signals are performing CDS and output by either Sel1 or Sel2.

Similarly, the light signals from Col 1 and Col 2 are then also stored onto the combination of Cap1 and Cap2. Thus, the signals from Col 1 and Col 2 are averaged and stored onto Cap1 and Cap2. The reference signals and the light signals are then provided to the correlated double sampling circuit 301 and a final sub sampled signal that is the average of two pixels is output to the output bus 210.

It can be appreciated that other implementations of signal averaging may be used while still staying within the scope of the present invention. Figure 2 is but one example of how signal averaging can be implemented in the analog domain. Thus, the signal averaging is not done in digital signal processing, but rather done in the readout portion of the image sensor. This provides for high-speed readout and does not increase the amount of computing power required for sub sampling.

While the example of Figure 1 is for a row having eight pixels (i.e., columns), it can be appreciated that the concepts and operation of the present invention can be extrapolated to a wide variety of combinations.

For example, the sub-sampling shown in Figure 1 "compresses" the number of columns by a factor of two, since two column readout circuits 207 are averaged by the signal averagers 209 prior to readout, an almost arbitrary amount of redaction in pixel resolution can be accomplished by the teachings of the present invention. For example, it is possible to have one signal averager 209 for every 3 (or even more) column readout circuits 207. This higher amount of compression would be more suitable for extremely high resolution pixel arrays

Further it should be noted that the averaging of the present invention may increase the sensitivity of the image sensor 101. Thus, the present invention preferably provides the option of an image sensor with high sensitivity and high frame rate. The analog sub-sampling/averaging of embodiments of the present invention can provide a high frame rate even with megapixel image sensors. For example, assuming a 24 MHz clock rate, a 1.3 megapixel image sensor may have an effective frame rate of about 15 frames per second Similarly, a 3.0 megapixel image sensor may have an effective frame rate of 6.5 frames per second. These estimations assume that all of the pixels of the image sensor are read out, i.e., full resolution readout

However, using sub-sampling as disclosed herein, the 1.3 megapixel image sensor can easily produce 30 frames per second if two-column averaging is used (as shown in Figure 1). Similarly, if two-column averaging is used and two-row horizontal averaging is used (at the output buffer 211), then the 3.0 megapixel frame rate can be increased four times to 26 frames per second. This type of sampling can provide full motion video quality, while still using a high resolution image sensor that can be also used for digital still images.

While the preferred embodiment of the invention has been illustrated and described, it will be appreciated that various changed can be made therein without departing from the spirit and scope of the invention. Thus, one of ordinary skill after reading the foregoing specification will be able to affect various changes, alterations, and substitutions of equivalents without departing from the broad concepts disclosed. It is therefore intended that the scope of the letters patent granted hereon be limited only by the definitions contained in appended claims and equivalents thereof, and not by limitations of the embodiments described herein.

## Claims

1. An image sensor comprising
a plurality of pixels arranged as a pixel array having a plurality of columns, each column having a column readout circuit, and
a plurality of selectively activated signal averagers, each of said selectively activated signal averagers associated with a plurality of adjacent column readout circuits, said signal averagers operative when activated to average signals output from said plurality of adjacent column readout circuits and provide an average signal to an output bus

2. The image sensor of Claim 1 wherein said pixels are active pixels.

3. The image sensor of any preceding claim wherein said signal averagers average the signals from its plurality of adjacent column readout circuits in the analog domain.

4. The image sensor of any preceding claim wherein said column readout circuits are correlated double sampling readout circuits.

5. The image sensor of any preceding claim further including an output buffer connected to said output bus.

6. The image sensor of Claim 5 wherein said output buffer is operative to store two horizontal lines of signals.

7. The image sensor of Claim 6 wherein said output buffer performs averaging of signals of said two horizontal lines of signals

8. The image sensor of any preceding claim wherein said signal averager comprises capacitors that can be shorted together to form a single capacitor that receives signals from said column readout circuits.

9. The image sensor of any preceding claim further including a switching system operative to:
(a) in a first setting selectively bypass said signal averagers such that said plurality of column readout circuits output signals directly to said output bus; and
(b) in a second setting providing the outputs from said column readout circuits to its associated signal averager for averaging prior to output to said output bus.

10. A method of reading out the signals from an image sensor having a pixel array having a plurality of columns, each column having a column readout circuit, the method comprising:
averaging the signals output by a plurality of column readout circuits, said plurality of column readout circuits being adjacent to one another;
outputting the averaged signal to an output bus.

11. The method of Claim 10 wherein said pixels are active pixels

12. The method of any of claims 10 to 11 wherein said averaging is performed in the analog domain.

13. The method of any of claims 10 to 12 wherein said column readout circuits are correlated doube sampling readout circuits.

14. The method of any of claims 10 to 13 further including buffering the averaged signals on said output bus in an output buffer.

15. The method of Claim 14 further including using said output buffer to store two horizontal lines of signals.

16. The method of Claim 15 further including averaging of signals of said two horizontal lines of signals.

17. The method of any of claims 10 to 16 wherein said averaging is performed by adding the signals from said plurality of column readout circuits.

18. The method of any of claims 10 to 17 further including the option of switching to:
(a) a first setting that foregoes the averaging of the signals output by a plurality of column readout circuits such that said plurality of column readout circuits output signals directly to said output bus; and
(b) a second setting that performs the averaging of the signals from said column readout circuits prior to output to said output bus.

19. A dual resolution image sensor that can operate in a high resolution mode and a low resolution mode comprising
a plurality of pixels arranged as a pixel array having a plurality of columns, each column having a column readout circuit; and
a plurality of selectively activated signal averagers, each of said selectively activated signal averagers associated with a plurality of adjacent column readout circuits, said signal averagers operative when activated to average signals in the analog domain output from said plurality of adjacent column readout circuits and provide an average signal to an output bus; and
a switching system operative to (a) in a first setting selectively bypass said signal averagers such that said plurality of column readout circuits output signals directly to said output bus, and (b) in a second setting providing the outputs from said column readout circuits to its associated signal averager for averaging prior to output to said output bus.

20. The image sensor of Claim 19 wherein said column readout circuits are correlated double sampling readout circuits.

21. The image sensor of any of claims 19 to 20 further including an output buffer connected to said output bus.

22. The image sensor of Claim 21 wherein said output buffer is operative to store two horizontal lines of signals.

23. The image sensor of Claim 22 wherein said output buffer performs averaging of signals of said two horizontal lines of signals

24. The image sensor of any of claims 19 to 23 wherein said signal averager comprises capacitors that can be shorted together to form a single capacitor that receives signals from said column readout circuits.
